# EUROPÄISCHE PATENTSCHRIFT

(11) **EP 3 501 914 B1**
(45) Veröffentlichungstag und Bekanntmachung des Hinweises auf die Patenterteilung: **27.01.2021**
(21) Anmeldenummer: 17209217.3
(22) Anmeldetag: 21.12.2017
(51) Int. Cl.: B60R 22/46

(54) **GURTROLLE MIT ANTRIEBSELEMENT**
BELT ROLLER WITH DRIVE ELEMENT
ROULEAU DE RUBAN POURVU D'ÉLÉMENT D'ENTRAÎNEMENT

(43) Veröffentlichungstag der Anmeldung: 26.06.2019
(73) Patentinhaber: SFS Intec Holding AG, 9435 Heerbrugg (CH)
(72) Erfinder: SCHÖNENBERGER, Markus, 9533 Kirchberg (CH); KUSTER, Hanspeter, 9436 Balgach (CH); BLICKENSTORFER, Florian, 8589 Sitterdorf (CH); HUNGERBÜHLER, Steve, 9400 Rorschach (CH)

(56) Entgegenhaltungen:
- DE-A1- 19 602 549
- DE-A1-102010 034 622
- DE-A1-102012 217 261

## Beschreibung

Die vorliegende Erfindung befasst sich mit einem Bauelement eines Gurtstraffers, wie er im Automobilbau als Sicherheitselement verwendet wird.

### HINTERGRUND

Ein Gurtstraffer zählt, wie der Airbag auch, zum sogenannten passiven Sicherheitssystem eines Fahrzeuges. Er hat die Aufgabe, bei einem Unfall die Sicherheitsgurte zu straffen, damit der Fahrzeuginsasse früher an der Gesamtverzögerung des Fahrzeuges teilnimmt. Dazu wird der Gurt innerhalb von ca. 10-15 Millisekunden gestrafft. Sinnvoll ist dies insbesondere dann, wenn dicke Kleidung ein enges Anliegen des Gurtes am Körper verhindert (zitiert nach Wikipedia).
Der Gurtstraffer wird sehr häufig im Gurtaufroller integriert. Als Energielieferant wird eine kleine pyrotechnische Ladung verwendet, die vom Airbagsteuergerät ausgelöst wird und deren Gasdruck eine Reihe von Stahlkugeln über ein Führungsrohr auf ein Zahnrad bzw. Schaufelrad lenkt, welches auf der Welle des Gurtaufrollers sitzt. Dieses Zahnrad wird häufig auch als pinion oder ball wheel bezeichnet, die Gesamtanordnung auch als Turbine, weil die schalenförmigen Aufnahmen für die Stahlkugeln an Wasserturbinenschaufeln erinnern. In dieser Schrift soll aber der neutrale Begriff Antriebselement für dieses Zahnrad verwendet werden.

### STAND DER TECHNIK

Ein Gurtstraffer gemäss aktueller Bauart umfasst somit einerseits einen Gasgenerator (pyrotechnische Ladung) mit Beschleunigungselementen (e.g. Kugeln aus Stahl, Kunststoff oder Formelementen) und einem Führungsrohr für diese Beschleunigungselemente. Weiterhin besitzt er eine Gurtrolle mit dem Antriebselement, welches von den Beschleunigungselementen betätigt wird. Es ist im Stand der Technik bekannt, die Gurtrolle als Gussteil oder Spritzgussteil aus Aluminium zu fertigen. Das Antriebselement integral mit der Gurtrolle zu fertigen ist kaum möglich, weil ein Alugussteil als Antriebselement dem Aufprall der Beschleunigungselemente im Einsatzfall kaum gewachsen wäre. Es ist daher bekannt, das Antriebselement aus zwei symmetrischen Kaltumformteilen aus Stahl herzustellen, die miteinander verschweisst werden. Dieses Antriebselement nach Stand der Technik wird auf die Welle der Gurtrolle über eine Verzahnung form- und kraftschlüssig aufgeschoben.

Die Herstellung aus zwei Kaltumformteilen und deren anschliessende Verschweissung hat Nachteile. Kaltumformteile, speziell mit komplexer Form, sind wegen des hohen Umformgrades in der Herstellung teuer. Die Verschweissung der beiden Kaltumformteile muss zudem eine hohe Qualität aufweisen, da im Einsatzfall die auftreffenden Stahlkugeln die Aufnahmeschaufeln auch in axialer Richtung belasten, also die beiden Hälften aufzuspreizen versuchen. Diese Last muss das Antriebselement aufnehmen können, weil ansonsten die Funktion des Gurtstraffers nicht gewährleistet werden kann.

Die Schrift DE 196 02 549 zeigt eine Gurtrolle mit einer ersten und zweiten Antriebsradhälfte, die gemeinsam auf einer Zahnwelle montiert werden. Ein Schwertkasten mit Führungsschwertern ist zuständig für die Führung der Massekugeln. Die der Gurtaufwickelwelle zugeordnete Hälfte des Antriebsrades ist mit der Gurtaufwickelwelle einstückig ausgebildet.

Die DE 10 2012 217 261 A1 offenbart ein Antriebselement nach dem Oberbegriff von Anspruch 1 und beschreibt einen Gurtstraffer mit einem Gurtaufroller, der ein drehfest verbundenes Strafferantriebsrad aufweist, das wiederum von beschleunigten Massekörpern betätigt werden kann. Das Strafferantriebsrad ist zweiteilig ausgebildet mit zwei formidentischen Hälften, wobei die erste Hälfte einstückig mit einem Profilkopf ausgebildet werden kann.

Die Aufgabe der Erfindung besteht darin, ein Antriebselement zu beschreiben, welches hohe Einsatzsicherheit bietet, einfach zu montieren und darüber hinaus kostengünstig herstellbar ist. Insbesondere soll die notwendige Festigkeit der Zahnrad-ähnlichen Aufnahmebereiche sichergestellt werden und Vereinfachungen an der Gurtrolle möglich sein.

### BESCHREIBUNG DER ERFINDUNG

Diese Aufgabe wird durch ein im Grundsatz zweiteiliges Antriebselement gelöst mit den Merkmalen des unabhängigen Anspruchs 1. Die Unteransprüche beschreiben weitere Varianten und Ausführungsbeispiele.

Ein Antriebselement für einen Gurtstraffer mit einer Gurtrolle kann im Grundsatz als Zahnrad oder Schaufelrad beschrieben werden und ist hier zumindest zweiteilig ausgeführt. Die Gurtrolle weist an einem axialen Ende am Umfang in einer Radialebene angeordnet muldenförmige Vertiefungen auf. Das erste Teil des zweiteiligen Zahnrades ist ein ringförmiges Gegenstück mit radial aussen angeordneten muldenähnlichen bzw. schalenförmigen Vertiefungen und einer radial innen angeordneten Innenverzahnung. Das zweite Teil ist ein im Wesentlichen ringförmiges, tiefgezogenes Blechteil mit radial aussen angeordneten, schalenförmigen Vertiefungen und einer radial innen angeordneten Innenverzahnung. Das Blechteil und das Gegenstück sind nach der Montage zum Antriebselement einander so gegenüberstehend angeordnet, dass die Schalen bzw. Mulden sich zu schaufelähnlichen, schalenförmigen Aufnahmen ergänzen. Gleichzeitig ergänzen die Innenverzahnungen von Blechteil sowie Gegenstück sich zu einer gemeinsamen Innenverzahnung.
"Ergänzen" ist hierbei nicht als optisch nahtlose, perfekt form- und kraftschlüssige Verbindung zu verstehen, sondern als Bildung einer funktionellen Einheit.
Bevorzugt wird beim Antriebselement das Gegenstück "das erste Teil" als massives Kaltumformteil ausgeführt. Das Gegenstück "das zweite Teil" wird erfindungsgemäß als tiefgezogenes Blechteil ausgeführt. Damit wird der optimale Kompromiss aus Herstellungskosten und sicherer Funktion gewährleistet
Beim Antriebselement wird, wenn das Gegenstück in der Ausführungsform als tiefgezogenes Blechteil ausgeführt ist, das Gegenstück im endmontierten Zustand durch eine ringförmige Stützscheibe zumindest teilweise formschlüssig umfasst und gehalten. Dadurch wird das Blechteil gestützt und kann auftretende Kräfte besser ableiten. Konsequenterweise wird die ringförmige Stützscheibe eine radial innen angeordnete Innenverzahnung aufweisen, die nach der Montage zusammen mit den Innenverzahnungen von Blechteil sowie Gegenstück sich zu einer gemeinsamen Innenverzahnung ergänzen. Damit wird die gemeinsame Montage erleichtert wie auch eine gemeinsame Schnittstelle zur Achse des Gurtstraffers hergestellt, welche die Kraftübertragung gewährleistet.

Die Gurtrolle mit ihren muldenförmigen Vertiefungen ist so beschaffen, dass die Vertiefungen an der Gurtrolle in Anzahl und Dimensionierung so ausgelegt sind, dass das Blechteil angelegt werden kann. Formschlüssig bedeutet hierbei nicht, dass jederzeit ein vollflächig vollständiger Kontakt gegeben sein muss. Im Rahmen von Fertigungstoleranzen können geringe Spalte und Abweichungen vorkommen, die aber den Einsatz nicht negativ beeinflussen. Die Gurtrolle kann dabei als Press-, Spritzgiess- oder Gussteil vorliegen, aus Leichtmetall wie Aluminium, Aluminiumguss, Aluminiumlegierungen oder auch als hochfester Kunststoff Bevorzugt wird so ein Antriebselement mit Gurtrolle an einem axialen Ende ein angeformtes Zahnrad aufweisen. Mit anderen Worten, die Achse bzw. ein Achsstummel der Gurtrolle selbst ist auf einem Abschnitt als Zahnrad ausgebildet. Dies erlaubt, dass das Blechteil sowie das Gegenstück und gegebenenfalls die Stützscheibe im montierten Zustand durch deren Innenverzahnung(en) über das Zahnrad mit der Gurtrolle in der Art einer Zahnradkupplung kraftschlüssig miteinander verbunden sind.

Ein Herstellverfahren für einer Gurtrolle mit einem Antriebselement nach dieser Erfindung umfasst folgende Schritte:
- Eine Gurtrolle wird als Press-, Spritzgiess- oder Gussteil bereitgestellt. Am Umfang sind in einer Radialebene angeordnet muldenförmige Vertiefungen angebracht sowie ein axiales, mit der Gurtrolle (wirk-)verbundenes Zahnrad.
- Auf das Zahnrad wird ein Blechteil derart aufgeschoben, dass das Blechteil einerseits mit seinen schalenförmigen Vertiefungen im Wesentlichen formschlüssig in die entsprechenden Aussparungen der Gurtrolle eingreift und gleichzeitig das Innenzahnrad in das Zahnrad eingreift, so dass eine Zahnradkupplung gebildet wird.
- Ein ringförmiges Gegenstücks wird auf das Zahnrad aufgeschoben, derart, dass die muldenähnlichen bzw. schalenförmigen Vertiefungen von Blechteil sich mit den Vertiefungen des Blechteils zu schaufelähnlichen, schalenförmigen Aufnahmen ergänzend gruppieren und gleichzeitig das Innenzahnrad des Gegenstücks in die Aussparungen des Aussenzahnrades eingreift, so dass eine Zahnradkupplung gebildet wird

In einer der in den Figuren gezeigten Ausführungsformen wird das Verfahren zur Herstellung einer Gurtrolle zusätzlich das Aufschieben einer ringförmigen Stützscheibe auf das Zahnrad beinhalten, derart, dass das Gegenstück durch Einbuchtungen der Stützscheibe formschlüssig umfasst wird.

Bevorzugt wird durch Aufpressen und/oder Verstemmen von Blechteil, Gegenstück und gegebenenfalls Stützscheibe mit der Gurtrolle bzw. dem Zahnrad eine kraftschlüssige Verbindung erzielt, die ein axiales Verschieben von Gurtrolle Blechteil und Gegenstück gegeneinander verhindern kann.

Das Antriebselement kann auch ohne die Gurtrolle vormontiert werden, das Verfahren würde dann wir folgt ablaufen:
- Bereitstellen eines ringförmigen, tiefgezogenen Blechteils
- Bereitstellen eines ringförmigen Gegenstücks
- Ausrichten von Blechteil und Gegenstück einander gegenüberstehend derart, dass die Schalen bzw. Mulden von Blechteil und Gegenstück sich zu schaufelähnlichen, schalenförmigen Aufnahmen ergänzend gruppieren
- und gleichzeitig die Innenverzahnungen von Blechteil sowie Gegenstück sich axial fluchtend zu einer gemeinsamen Innenverzahnung ergänzen.

Wird die Ausführungsvariante mit Stützscheibe gewählt, erweitert sich das Vormontageverfahren wie folgt:
- Bereitstellen einer ringförmige Stützscheibe
- Ausrichten der Stützscheibe derart, dass das Gegenstück durch die Einbuchtungen der Stützscheibe formschlüssig umfasst wird
- und gleichzeitig die Innenverzahnungen von Blechteil, Gegenstück und Stützscheibe sich axial fluchtend zu einer gemeinsamen Innenverzahnung ergänzen.

Danach werden bevorzugt das Blechteil, das Gegenstück und gegebenenfalls Stützscheibe miteinander kraftschlüssig verbunden. Diese kraftschlüssige Verbindung kann durch Verstemmen bzw. Verpressen erfolgen.

### KURZBESCHREIBUNG DER FIGUREN

Figur 1 zeigt das Funktionsprinzip eines Gurtstraffer-Mechanismus mit Kugeln nach Stand der Technik.
Figur 2 zeigt ein Gegenstück gemäss einer ersten Ausführungsform der Erfindung.
Figur 3 zeigt ein Blechteil gemäss einer ersten Ausführungsform der Erfindung
Figur 4 zeigt ein Formteil, das als Blechteil und als Gegenstück einsetzbar ist gemäss einer zweiten Ausführungsform der Erfindung.
Figur 5 zeigt eine ringförmige Stützscheibe passend zur zweiten Ausführungsform der Erfindung.
Figur 6 zeigt ein vormontiertes Antriebselement aus zwei Formteilen gemäss Figur 4 und einer Stützscheibe gemäss Figur 5.
Figur 7 zeigt eine erfindungsgemässe Gurtrolle mit angeformten muldenförmigen Vertiefungen und einem auf der Achse angeformten Zahnrad.
Figur 8 zeigt eine Gurtrolle mit einem auf das Zahnrad der Gurtrolle aufgeschobenen Antriebselement.

### BESCHREIBUNG VON AUSFÜHRUNGSFORMEN ANHAND DER FIGUREN

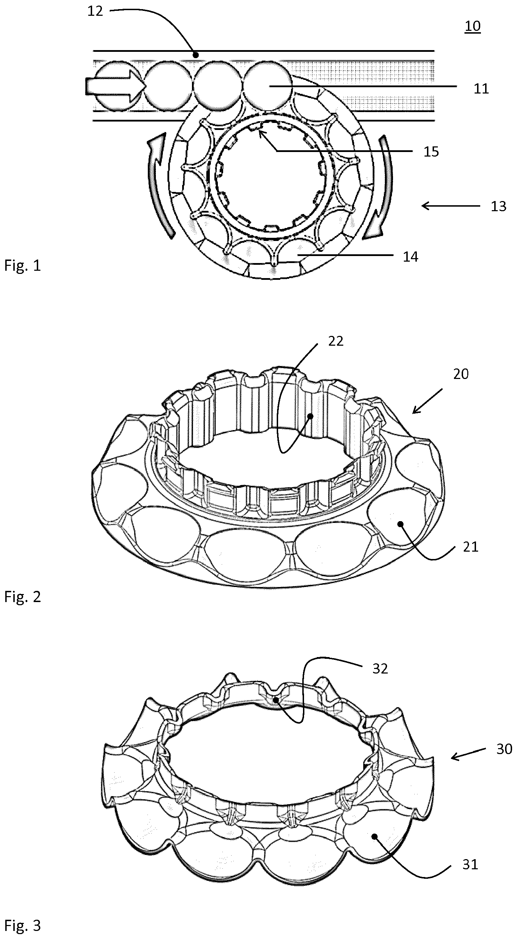

Figur 1 zeigt einen Gurtstraffer-Antrieb 10 gemäss Stand der Technik. Der Gasgenerator ist hier nicht gezeigt, sondern lediglich vereinfacht das Antriebsprinzip. Kugelförmige Antriebselemente (z.B. Stahlkugeln) 11 werden in einem Führungsrohr 12 beschleunigt auf ein Antriebselement 13 geleitet, welches von den Stahlkugeln 11 betätigt wird. Muldenförmige Aufnahmen 14 des Antriebselements 13 nehmen den Impuls der Stahlkugeln auf und wandeln ihn um in eine Drehbewegung. Die Innenverzahnung 15 dient dazu, den Kraftschluss mit der Gurtrolle (nicht gezeigt) sicherzustellen. Dieses Antriebselement nach Stand der Technik wird auf die Welle einer Gurtrolle über eine Verzahnung form- und kraftschlüssig aufgeschoben.

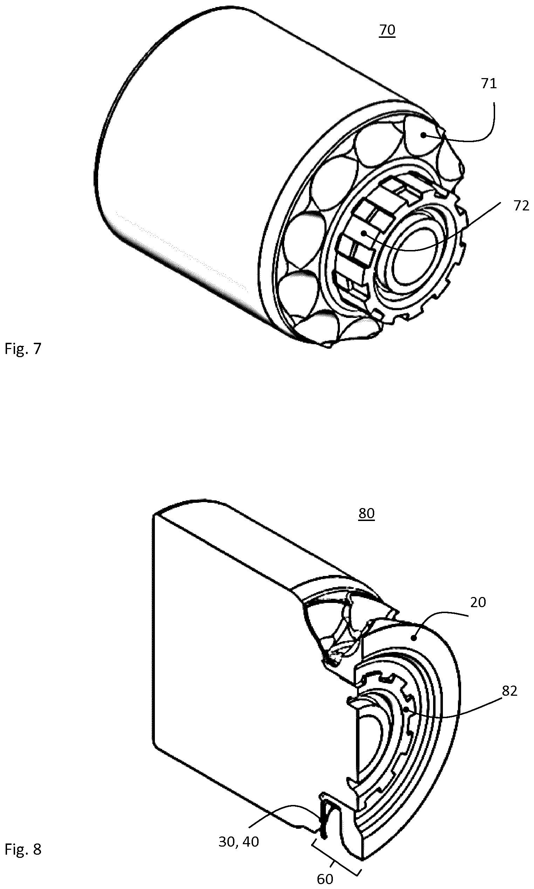

Figuren 2 und 3 zeigen eine erste Ausführungsform der Erfindung und werden daher gemeinsam erläutert. Zusammen zeigen sie die Grundelemente eines Antriebselements. Das Blechteil 30 von Figur 3 ist im Wesentlichen ringförmig und wird als tiefgezogenes Blechteil hergestellt. An seinem radial aussen liegenden Rand befinden sich sternförmig angeordnet schalenförmige Vertiefungen 31 und am radialen Innenrand eine (Innen-)Verzahnung 32. Die Verzahnung dient später bei der Montage als Mittel zum kontrollierten Ausrichten sowie zur Kraftübertragung auf ein entsprechendes Zahnrad bzw. Achse mit zahnradförmiger Aussenkontur. Figur 2 mit dem Gegenstück 20 entspricht einem korrespondierenden Element zum Blechteil 30. Gegenstück 20 ist ebenfalls ringförmig ausgebildet, besitzt aber einen geringfügig anderen Aufbau. Wie in Fig. 2 erkennbar, wird Gegenstück 20 als kompaktes Fliesspressteil hergestellt. Es weist radial aussen angeordnete muldenähnlichen Vertiefungen 21 auf und ebenfalls eine radial innen angeordneten Innenverzahnung 22. Durch die Ausführung als Fliesspressteil ist es zwar teurer in der Herstellung als das tiefgezogene Blechteil 30, ist aber im Gegensatz hierzu in der Lage, die im Einsatz auftretenden Kräfte der auftreffenden Stahlkugeln direkt aufzunehmen. Die Innenverzahnungen 22, 32 von Blechteil 30 und Gegenstück 20 werden gleichartig ausgelegt. Werden die beiden Bauteile axial fluchtend aufeinander ausgerichtet ergänzen sich die Vertiefungen 31 und 21 paarweise gegenüberstehend so, dass sie gemeinsam eine Schale bzw. Form bilden, die so dimensioniert ist, die Beschleunigungselemente des Gurtstraffer-Mechanismus geeignet aufzunehmen. Dabei ist es nicht wesentlich, dass diese gefügten Schalen glatte Berührnähte aufweisen; die beiden Vertiefungen können durchaus einen geringen Abstand voneinander haben und dennoch die geforderte Funktion sicher erfüllen.
Wie weiter unten gezeigt wird (Figur 8), wird die geringere Steifigkeit des Blechteils 30 in der Endmontage mit der Gurtrolle 70 durch deren Grundform kompensiert - die Gurtrolle wirkt dabei als zusätzliches Stützelement für das Blechteil 20.

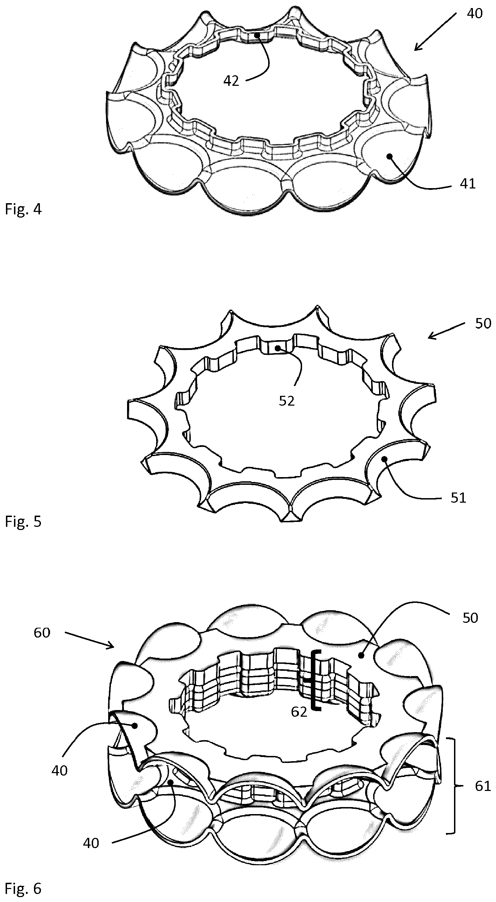

Figur 4 zeigt ein Formteil 40, das sowohl als Blechteil wie als Gegenstück einsetzbar ist gemäss einer zweiten Ausführungsform der Erfindung. Blechteil 40 ist so gestaltet, dass es spiegelsymmetrisch zu sich selbst ist und damit jeweils zwei Formteile so zusammengesetzt werden können, dass deren schalenförmigen Vertiefungen 41 sich gegenüberstehen und zusammen im Grundsatz ein Antriebselement 60 bilden können. Da das Formteil 40 ebenfalls eine Innenverzahnung 42 aufweist, wird durch den Zusammenbau wiederum eine gemeinsame Innenverzahnung gebildet.

Wie oben erwähnt, ist ein reines Tiefziehteil (tiefgezogenes Blechteil) kaum in der Lage, den Impuls von Beschleunigungselementen im Belastungsfall unbeschädigt aufzunehmen. Daher wird in einer Weiterbildung der zweiten Ausführungsform eine Hälfte des Antriebselementes durch eine Stützscheibe 50 ergänzt. Figur 5 zeigt eine Variante einer solchen ringförmigen Stützscheibe; sie weist eine Innenverzahnung 52 auf und am radialen Aussenrand eine zahnradähnliche Ausbildung mit einer Stützfläche 51. Diese Stützfläche ist der (Aussen-) Form der schalenförmigen Vertiefungen 41 angepasst. Wird eine Stützscheibe 50 koaxial mit zwei Formteilen 41 wie oben beschrieben montiert, liegen die Stützflächen 51 aussen an den Vertiefungen 41 an und übertragen die im Einsatzfall auftretenden Kräfte ebenfalls mit auf die Achse der Gurtrolle. Dadurch wird eine Verformung des Formteils 40 vermieden. Die Stütze für die zweite Seite des Antriebselements 60 wird durch die spezielle Ausgestaltung der Gurtrolle ermöglicht.

Figur 6 zeigt ein vormontiertes Antriebselement aus zwei Formteilen 40 gemäss Figur 4 und einer Stützscheibe 50 gemäss Figur 5. Wie in der Figur 6 ersichtlich, bilden die muldenförmigen, einander gegenüberstehend angeordneten Vertiefungen 41 der beiden Formteile 40 eine gemeinsame schalenförmige Aufnahme 61. Diese Schale besitzt keine Berührnaht und vermeidet dadurch auch, dass lokale Fertigungstoleranzen das Ausrichten erschweren. Figur 6 zeigt eine Konfiguration mit einer Stützscheibe 50. Auch wird deutlich, wie die Innenverzahnung der beiden Formteile 40 und der Stützscheibe 50 sich zu einer gemeinsamen Verzahnung 62 ergänzen.

Figur 7 illustriert eine erfindungsgemässe Gurtrolle 70 mit angeformten muldenförmigen Vertiefungen 71 und einem auf der Achse angeformten Zahnrad 72. Der zylindrische Teil der Gurtrolle 70 weist üblicherweise Merkmale auf, die u.a. zur Befestigung eines Sicherheitsgurtes dienen; diese sind in Figur 7 und 8 weggelassen. Da eine Gurtrolle 70, 80 üblicherweise als Leichtmetallguss gefertigt wird, können die von der Erfindung vorgeschlagenen Vertiefungen 71 durch eine angepasste Form ohne erhöhten Nachbearbeitungsaufwand erzielt werden. Die Kontur der Vertiefungen 71 ist dabei so ausgelegt, dass sie sich - ähnlich wie die Stützscheibe 51 - der nach aussen weisenden Form der schalenförmigen Vertiefungen 41 bzw. 31 eines Gegenstücks 30 bzw. 40 anpasst. Wie erwähnt, würde sich ein Blechteil 30, 40 alleine im Belastungsfall verbiegen; ein in Aluminium gegossenes Antriebselement könnte brechen. Die Verbindung von beidem in der von der Erfindung vorgeschlagenen Art erlaubt es, die Fertigungsvorteile von Tiefziehelementen und Gussverfahren zu verbinden. Die beim Gurtstraffen auf die Schaufeln 61 beschleunigten Beschleunigungselemente übertragen ihren Impuls auf das Antriebselement und bewirken so die Gurtstraffung.

Figur 8 zeigt eine Gurtrolle 80 mit einem auf das Zahnrad 82 aufgeschobenen Antriebselement 60. Figur 8 illustriert hierbei die erste Ausführungsform, die ein massives Gegenstück 20 verwendet kombiniert mit einem Blechteil 30, 40, welches durch die Vertiefungen der Gurtrolle 80 gestützt wird.

### BEZUGSZEICHENLISTE

- 10: Gurtstraffer-Antrieb
- 11: (Kugelförmige) Antriebselemente, Stahlkugeln
- 12: Führungsrohr
- 13: Antriebselement
- 14: Muldenförmige Aufnahmen
- 15: Innenverzahnung
- 20: Gegenstück
- 21: (radial aussen angeordnete) muldenförmigen Vertiefungen
- 30: (tiefgezogenes) Blechteil
- 31: (radial aussen angeordnete) schalenförmigen Vertiefungen
- 40: Blechteil, Gegenstück, Formteil
- 41: (radial aussen angeordnete) schalenförmigen Vertiefungen
- 50: Stützscheibe
- 51: Stützfläche
- 52: (radial innen angeordnete) Innenverzahnung
- 60: Antriebselement
- 61: schaufelähnliche, schalenförmige Aufnahmen
- 70: Gurtrolle
- 71: muldenförmige Vertiefungen
- 80: Gurtrolle

## Patentansprüche

1. Antriebselement (60) für einen Gurtstraffer mit einer Gurtrolle (70, 80), die an einem axialen Ende am Umfang in einer Radialebene angeordnete, muldenförmige Vertiefungen (71) aufweist und-einem als Zahnrad ausgeführten, zweiteiligen Antriebselement (60), wobei das erste Teil ein ringförmiges Gegenstück (20, 40) ist mit radial aussen angeordneten muldenähnlichen (21) bzw. schalenförmigen (31, 41) Vertiefungen und einer radial innen angeordneten Innenverzahnung (22, 42),
**dadurch gekennzeichnet, dass**
- das zweite Teil ein im Wesentlichen ringförmiges, tiefgezogenes Blechteil (30, 40) mit radial aussen angeordneten, schalenförmigen Vertiefungen (31, 41) und einer radial innen angeordneten Innenverzahnung (32, 42) ist, die im montierten Zustand formschlüssig in die am Umfang angeordneten, muldenförmige Vertiefungen (71) der Gurtrolle (70, 80) eingreifen,
- wobei Blechteil (30, 40) und Gegenstück (20, 40) nach Montage zum Antriebselement (60) einander so gegenüberstehend angeordnet sind, dass die Schalen bzw. Mulden (21, 31, 41) sich zu schaufelähnlichen, schalenförmigen Aufnahmen (61) ergänzen
- und die Innenverzahnungen (22, 32, 42) von Blechteil (30, 40) sowie Gegenstück (20, 40) sich zu einer gemeinsamen Innenverzahnung (62) ergänzen.

2. Antriebselement (60) nach Anspruch 1, **dadurch gekennzeichnet, dass** das Gegenstück (20) als massives Kaltumformteil ausgeführt ist.

3. Antriebselement (60) nach Anspruch 1, **dadurch gekennzeichnet, dass** das Gegenstück (30, 40) als tiefgezogenes Blechteil ausgeführt ist, welches im endmontierten Zustand durch eine ringförmige Stützscheibe (50) zumindest teilweise formschlüssig umfasst und gehalten wird .

4. Antriebselement (60) nach Anspruch 3, **dadurch gekennzeichnet, dass** die ringförmige Stützscheibe (50) eine radial innen angeordnete Innenverzahnung (52) aufweist, die nach der Montage zusammen mit den Innenverzahnungen (22, 32, 42) von Blechteil (30, 40) sowie Gegenstück (40) sich zu einer gemeinsamen Innenverzahnung (62) ergänzen.

5. Antriebselement (60) mit einer Gurtrolle (70, 80) nach Anspruch 1 - 4, **dadurch gekennzeichnet, dass**
- die Gurtrolle (70, 80) an einem axialen Ende ein angeformtes Zahnrad (72) aufweist und
- das Blechteil (30, 40) sowie Gegenstück (20, 40) und gegebenenfalls Stützscheibe (50) im montierten Zustand durch deren Innenverzahnung (22, 32, 42, 62) über das Zahnrad (72) mit der Gurtrolle (70, 80) in der Art einer Zahnradkupplung kraftschlüssig miteinander verbunden sind.

6. Verfahren zur Herstellung einer Gurtrolle (70, 80) mit einem Antriebselement (60) nach Anspruch 1 - 5 mit folgenden Schritten:
- Bereitstellen der Gurtrolle (70) als Press-, Spritzgiess- oder Gussteil, mit an ihrem Umfang in einer Radialebene angeordneten, muldenförmige Vertiefungen (71) sowie einem axialen, mit der Gurtrolle verbundenen Zahnrad (72),
- Aufschieben eines Blechteils (30, 40) auf das Zahnrad (72) derart, dass das Blechteil einerseits mit seinen schalenförmigen Vertiefungen (31, 41) im Wesentlichen formschlüssig in die entsprechenden Aussparungen (71) der Gurtrolle eingreift und gleichzeitig das Innenzahnrad in das Zahnrad (72) eingreift, so dass eine Zahnradkupplung gebildet wird,
- Aufschieben eines ringförmigen Gegenstücks (20, 40) auf das Zahnrad (72) derart, dass die muldenähnlichen (21) bzw. schalenförmigen (31, 41) Vertiefungen von Blechteil (30, 40) sich mit den Vertiefungen (31, 41) des Blechteils (30, 40) zu schaufelähnlichen, schalenförmigen Aufnahmen (61) ergänzend gruppieren und gleichzeitig das Innenzahnrad (32, 42) des Gegenstücks in die Aussparungen des Aussenzahnrades eingreift, so dass eine Zahnradkupplung gebildet wird

7. Verfahren nach Anspruch 6, **dadurch gekennzeichnet, dass** zusätzlich eine ringförmige Stützscheibe (50) auf das Zahnrad (72) aufgeschoben wird derart, dass das Gegenstück (30, 40) durch Einbuchtungen (51) der Stützscheibe (50) formschlüssig umfasst wird.

8. Verfahren nach Anspruch 6 - 7, **dadurch gekennzeichnet, dass** durch Aufpressen und/oder Verstemmen von Blechteil (30,40), Gegenstück (20, 40) und gegebenenfalls Stützscheibe (50) mit der Gurtrolle (70, 80) bzw. dem Zahnrad (72) eine kraftschlüssige Verbindung erzielt wird, die ein axiales Verschieben von Gurtrolle (70, 80), Blechteil (30, 40) und Gegenstück (20, 40) gegeneinander verhindern kann.

9. Verfahren zur Herstellung eines Antriebselements nach Anspruch 1 bis 5, in folgenden Schritten:
- Bereitstellen eines ringförmigen, tiefgezogenen Blechteils (30, 40)
- Bereitstellen eines ringförmigen Gegenstücks (20, 40)
- Ausrichten von Blechteil (30, 40) und Gegenstück (20, 40) einander gegenüberstehend derart, dass die Schalen bzw. Mulden (21, 31, 41) von Blechteil (30, 40) und Gegenstück (20, 40) sich zu schaufelähnlichen, schalenförmigen Aufnahmen (61) ergänzend gruppieren
- und gleichzeitig die Innenverzahnungen (22, 32, 42) von Blechteil (30, 40) sowie Gegenstück (20, 40) sich axial fluchtend zu einer gemeinsamen Innenverzahnung (62) ergänzen.

10. Verfahren zur Herstellung eines Antriebselements nach Anspruch 9,
zusätzlich umfassend
- Bereitstellen einer ringförmige Stützscheibe (50)
- Ausrichten der Stützscheibe (50) derart, dass das Gegenstück (30, 40) durch die Einbuchtungen (51) der Stützscheibe (50) formschlüssig umfasst wird
- und gleichzeitig die Innenverzahnungen (22, 32, 42, 52) von Blechteil (30, 40), Gegenstück (20, 40) und Stützscheibe (50) sich axial fluchtend zu einer gemeinsamen Innenverzahnung (62) ergänzen.

11. Verfahren zur Herstellung eines Antriebselements nach Anspruch 9 oder 10, wobei Blechteil (30, 40), Gegenstück (30, 40) und gegebenenfalls Stützscheibe (50) miteinander kraftschlüssig verbunden werden.

12. Verfahren zur Herstellung eines Antriebselements nach Anspruch 11, **dadurch gekennzeichnet, dass** die kraftschlüssige Verbindung durch Verstemmen bzw. Verpressen erfolgt.

## Claims

1. A drive element (60) for a belt tensioner with a belt reel (70, 80) which has trough-like indentations (71) arranged at an axial end on the circumference in a radial plane and a two-part drive element (60) designed as a gearwheel, the first part being an annular counter piece (20, 40) with trough-like (21) or bowl-shaped (31, 41) indentations arranged radially on the outside and an internal tooth system (22, 42) arranged radially on the inside,
**characterized in that**
- the second part is a substantially annular, deep-drawn sheet metal part (30, 40) with bowl-shaped indentations (31, 41) arranged radially on the outside and with an internal tooth system (32, 42) arranged radially on the inside which, in the assembled state, engage in a positive-locking manner in the trough-like indentations (71) of the belt reel (70, 80) arranged on the circumference,
- wherein, after assembly to form the drive element (60), the sheet metal part (30, 40) and the counter piece (20, 40) are arranged opposite one another in such a manner that the bowls or troughs (21, 31, 41) complement each to form blade-like, bowl-shaped receptacles (61)
- and the inner tooth systems (22, 32, 42) of the sheet metal part (30, 40) and the counter piece (20, 40) complement each other to form a common internal tooth system (62).

2. The drive element (60) according to claim 1, **characterized in that** the counter piece (20) is designed as a solid cold-formed part.

3. The drive element (60) according to claim 1, **characterized in that** the counter piece (30, 40) is designed as a deep-drawn sheet metal part which, in the final assembled state, is at least partially surrounded and held in a positive-locking manner by an annular support disc (50).

4. The drive element (60) according to claim 3, **characterized in that** the annular support disc (50) has an internal tooth system (52) arranged radially on the inside which, after assembly, together with the internal tooth systems (22, 32, 42) of the sheet metal part (30, 40) and the counter piece (40) complement each other to form a common internal tooth system (62).

5. The drive element (60) with a belt reel (70, 80) according to claims 1 - 4, **characterized in that**
- on an axial end, the belt reel (70, 80) has a gear wheel (72) integrally formed thereon, and
- in the assembled state, the sheet metal part (30, 40) as well as the counter piece (20, 40) and optionally the support disc (50) are nonpositively connected to one another by their internal tooth system (22, 32, 42, 62) via the gear wheel (72) with the belt reel (70, 80) in the manner of a gear coupling.

6. A method of producing a belt reel (70, 80) with a drive element (60) according to claims 1 - 5, comprising the following steps:
- providing the belt reel (70) as a pressed, injection-molded or cast part with trough-shaped indentations (71) arranged on its circumference in a radial plane, and with an axial gear wheel (72) connected to the belt reel,
- sliding a sheet metal part (30, 40) onto the gear wheel (72) in such a manner that, on the one hand, the sheet metal part engages with its bowl-shaped indentations (31, 41) in a substantially positive-locking manner in the corresponding recesses (71) of the belt reel and, at the same time, the internal gear wheel engages in the gear wheel (72) so that a gear coupling is formed,
- sliding an annular counter piece (20, 40) onto the gear wheel (72) in such a manner that the trough-like (21) or bowl-shaped (31, 41) indentations of the sheet metal part (30, 40) group together with the indentations (31, 41) of the sheet metal part (30, 40) in a complementary manner to form blade-like, bowl-shaped receptacles (61) and, at the same time, the internal gear wheel (32, 42) of the counter piece engages in the recesses of the external gear wheel so that a gear coupling is formed.

7. The method according to claim 6, **characterized in that** in addition an annular support disc (50) is slid onto the gear wheel (72) in such a manner that the counter piece (30, 40) is surrounded by notches (51) of the support disc (50) in a positive-locking manner.

8. The method according to claims 6 - 7, **characterized in that** by pressing and/or caulking of the sheet metal part (30, 40), the counter piece (20, 40) and, optionally, the support disc (50) together with the belt reel (70, 80) or the gear wheel (72), a nonpositive-locking connection is achieved which can prevent axial displacement of the belt reel (70, 80), the sheet metal part (30, 40) and the counter piece (20, 40) relative to one another.

9. A method for manufacturing a drive element according to claims 1 to 5, in the following steps:
- providing an annular, deep-drawn sheet metal part (30, 40),
- providing an annular counter piece (20, 40),
- aligning the sheet metal part (30, 40) and the counter piece (20, 40) opposite one another in such a manner that the bowls or troughs (21, 31, 41) of sheet metal part (30, 40) and the counter piece (20, 40) are grouped together in a complementary manner to form blade-like, bowl-shaped receptacles (61)
- and, at the same time, the internal tooth systems (22, 32, 42) of the sheet metal part (30, 40) and the counter piece (20, 40) complement each other in axial alignment to form a common internal tooth system (62).

10. The method for producing a drive element according to claim 9, additionally comprising
- providing an annular support disc (50),
- aligning the support disc (50) in such a manner that the counter piece (30, 40) is surrounded by the notches (51) of the supporting disk (50) in a positive-locking manner
- and, at the same time, the internal tooth system (22, 32, 42, 52) of the sheet metal part (30, 40), the counter piece (20, 40) and the support disc (50) complement each other in axial alignment to form a common internal tooth system (62).

11. The method for producing a drive element according to claim 9 or 10, wherein the sheet metal part (30, 40), the counter piece (30, 40) and optionally the support disc (50) are connected to one another in a nonpositive locking manner.

12. The method for producing a drive element according to claim 11, **characterized in that** the nonpositive-locking connection is established by caulking or pressing.

## Revendications

1. Elément d'entraînement (60) pour un prétensionneur de ceinture avec un enrouleur de ceinture (70, 80) qui comporte des cavités (71) en forme de berceaux, disposées à une extrémité axiale sur la périphérie dans un plan radial et un élément d'entraînement (60) en deux parties réalisé comme une roue dentée, sachant que la première partie est une contre-pièce (20, 40) de forme annulaire avec des cavités analogues à des berceaux (21) ou en forme de coques (31, 41) disposées radialement à l'extérieur et une denture intérieure (22, 42) disposée radialement à l'intérieur,
**caractérisé en ce que**
- la deuxième partie est une pièce en tôle (30, 40) pour l'essentiel emboutie, de forme annulaire avec des cavités (31, 41) en forme de coques, disposés radialement à l'extérieur et une denture intérieure (32, 42) disposée radialement à l'intérieur, qui à l'état monté viennent en prise par conformité de forme dans les cavités (71) de l'enrouleur de ceinture (70, 80), en forme de berceaux, disposées sur la périphérie,
- sachant que la pièce en tôle (30, 40) et la contre-pièce (20, 40) sont disposées après montage opposées l'une à l'autre par rapport à l'élément d'entraînement (60) de sorte que les coques ou berceaux (21, 31, 41) se complètent en logements (61) analogues à des pales, en forme de coques,
- et les dentures intérieures (22, 32, 42) de la pièce en tôle (30, 40) ainsi que la contre-pièce (20, 40) se complètent en une denture intérieure commune (62).

2. Elément d'entraînement (60) selon la revendication 1, **caractérisé en ce que** la contre-pièce (20) est réalisée sous la forme d'une pièce formée à froid massive.

3. Elément d'entraînement (60) selon la revendication 1, **caractérisé en ce que** la contre-pièce (30, 40) est réalisée en tant que pièce en tôle emboutie, laquelle est entourée et maintenue à l'état de montage final au moins en partie par conformité de forme par une rondelle d'appui (50) de forme annulaire.

4. Elément d'entraînement (60) selon la revendication 3, **caractérisé en ce que** la rondelle d'appui de forme annulaire (50) comporte une denture intérieure (52) disposée radialement à l'intérieur, qui après le montage ensemble avec les dentures intérieures (22, 32, 42) de la pièce en tôle (30, 40) ainsi que de la contre-pièce (40) se complètent en une denture intérieure commune (62).

5. Elément d'entraînement (60) avec un enrouleur de ceinture (70, 80) selon les revendications 1 - 4, **caractérisé en ce que**
- l'enrouleur de ceinture (70, 80) comporte une roue dentée (72) conformée à une extrémité axiale et
- la pièce en tôle (30, 40) ainsi que la contre-pièce (20, 40) et le cas échéant la rondelle d'appui (50) sont reliées l'une à l'autre par adhérence à l'état monté par leur denture intérieure (22, 32, 42, 62) par le biais de la roue dentée (72) avec l'enrouleur de ceinture (70, 80) à la façon d'un accouplement par roues dentées.

6. Procédé de fabrication d'un enrouleur de ceinture (70, 80) avec un élément d'entraînement (60) selon les revendications 1 - 5 avec les étapes suivantes :
- préparation de l'enrouleur de ceinture (70) sous la forme d'une pièce estampée, moulée par injection ou moulée avec des cavités (71) en forme de berceaux, disposées sur sa périphérie dans un plan radial ainsi qu'une roue dentée (72) axiale reliée à l'enrouleur de ceinture,
- enfilage d'une pièce en tôle (30, 40) sur la roue dentée (72) de telle manière que la pièce en tôle vient d'une part en prise avec ses cavités en forme de coques (31, 41) pour l'essentiel par conformité de forme dans les évidements correspondants (71) de l'enrouleur de ceinture et la roue dentée intérieure vient simultanément en prise dans la roue dentée (72) de telle manière qu'un accouplement par roues dentées est formé,
- enfilage d'une contre-pièce de forme annulaire (20, 40) sur la roue dentée (72) de telle manière que les cavités analogues à des berceaux (21) ou en forme de coques (31, 41) de la pièce en tôle (30, 40) se regroupent de façon complémentaire avec les cavités (31, 41) de la pièce en tôle (30, 40) en logements analogues à des pales, en forme de coques (61) et que simultanément la roue dentée intérieure (32, 42) de la contre-pièce vient en prise dans les évidements de la roue dentée extérieure de sorte qu'un accouplement par roues dentées est formé.

7. Procédé selon la revendication 6, **caractérisé en ce qu'**en plus une rondelle d'appui de forme annulaire (50) est glissée sur la roue dentée (72) de telle manière que la contre-pièce (30, 40) est entourée par conformité de forme par les creux (51) de la rondelle d'appui (50).

8. Procédé selon les revendications 6 - 7, **caractérisé en ce que** par compression et/ou matage de la pièce en tôle (30, 40), de la contre-pièce (20, 40) et le cas échéant de la rondelle d'appui (50) avec l'enrouleur de ceinture (70, 80) ou la roue dentée (72), on obtient un assemblage par adhérence, qui peut éviter un déplacement axial de l'enrouleur de ceinture (70, 80), de la pièce en tôle (30, 40) et de la contre-pièce (20, 40) l'un contre l'autre.

9. Procédé de fabrication d'un élément d'entraînement selon les revendications 1 à 5 dans les étapes suivantes :
- préparation d'une pièce en tôle de forme annulaire, emboutie à froid (30, 40),
- préparation d'une contre-pièce de forme annulaire (20, 40),
- orientation de la pièce en tôle (30, 40) et de la contre-pièce (20, 40) opposées l'une à l'autre de telle manière que les coques ou berceaux (21, 31, 41) de la pièce en tôle (30, 40) et de la contre-pièce (20, 40) se regroupent de façon complémentaire en logements (61) en forme de coque, analogues à des pales
- et simultanément les dentures intérieures (22, 32, 42) de la pièce en tôle (30, 40) ainsi que de la contre-pièce (20, 40) se complètent en alignement axial en une denture intérieure commune (62).

10. Procédé de fabrication d'un élément d'entraînement selon la revendication 9, comprenant en plus
- la préparation d'une rondelle d'appui (50), de forme annulaire,
- l'orientation de la rondelle d'appui (50) de telle manière que la contre-pièce (30, 40) est entourée par les creux (51) de la rondelle d'appui (50) par conformité de forme,
- et simultanément les dentures intérieures (22, 32, 42, 52) de la pièce en tôle (30, 40), de la contre-pièce (20, 40) et de la rondelle d'appui (50) se complètent en alignement axial en une denture intérieure commune (62).

11. Procédé de fabrication d'un élément d'entraînement selon la revendication 9 ou 10, sachant que la pièce en tôle (30, 40), la contre-pièce (30, 40) et, le cas échéant, la rondelle d'appui (50) sont reliées entre elles par adhérence.

12. Procédé de fabrication d'un élément d'entraînement selon la revendication 11, **caractérisé en ce que** l'assemblage par adhérence a lieu par matage ou compression.
